# EUROPEAN PATENT APPLICATION

(11) **EP 4 650 293 A1**
(43) Date of publication of application: **19.11.2025**
(21) Application number: 25175771.2
(22) Date of filing: 12.05.2025
(51) Int. Cl.: B65D 5/50

(54) **PACKING MEMBER**

(30) Priority: 15.05.2024 JP 2024079293
(71) Applicant: Kyocera Document Solutions Inc., Osaka-shi, Osaka 540-8585 (JP)
(72) Inventor: Itano, Atsushi, Osaka, 540-8585 (JP)
(74) Representative: BRP Renaud & Partner mbB Rechtsanwälte Patentanwälte Steuerberater

(57) **Abstract**

A packing member (1) having a storage space (S) formed by bending a single sheet material has a floor (2), a pair of side walls (3), and a pair of cushioning portions (4). The pair of side walls (2) are formed by being bent upward from circumferential edges of the floor (2) and are arranged opposite each other across the storage space (S) in the first direction (D1). The pair of cushioning portions (4) are arranged opposite each other at opposite ends across the storage space (S) in the second direction (D2) orthogonal to the first direction (D1). The cushioning portion (4) has a first cushioning portion (41) formed in a shape of a plate extending along the second direction (D2) and a plate-form second cushioning portion (42) arranged above the first cushioning portion (41) at an interval from it, extending along the second direction (D2), and formed in an inverted V-shape as viewed from the second direction (D2).

## Description

### BACKGROUND

The present disclosure relates to a packing member.

Conventionally, a packing member formed by bending into a predetermined three-dimensional shape a single sheet material (blank) made of, for example, cardboard or the like is widely used. Such a packing member includes a cushioning portion formed outside a storage space where a packed article is stored.

### SUMMARY

An object of the present disclosure is to provide a packing member that, despite having a cost-reduced configuration, provides an enhanced cushioning effect.

According to one aspect of the present disclosure, a packing member having a storage space formed by bending a single sheet material has a floor, a pair of side walls, and a pair of cushioning portions. The floor is in a rectangular shape. The pair of side walls are formed by being bent upward from circumferential edges of the floor and arranged opposite each other across the storage space in the first direction. The pair of cushioning portions are arranged opposite each other at opposite ends across the storage space in the second direction orthogonal to the first direction. The cushioning portion has a first cushioning portion formed in the shape of a plate extending along the second direction and a plate-form second cushioning portion arranged above the first cushioning portion at an interval from it, extending along the second direction, and formed in an inverted V-shape as viewed from the second direction.

### BRIEF DESCRIPTION OF THE DRAWINGS

Fig. 1 is a perspective view of a packing member and a holding member according to one embodiment of the present disclosure.
Fig. 2 is an exploded perspective view of the packing member and the holding member in Fig. 1.
Fig. 3 is a development view of the packing member in Fig. 1.
Fig. 4 is an enlarged part development view of the packing member in Fig. 3.
Fig. 5 is a side view of the packing member in Fig. 1 as viewed from the second direction.
Fig. 6 is an enlarged part development view of the packing member of Modified Example 1.
Fig. 7 is a side view of the packing member of Modified Example 1 as viewed from the second direction.
Fig. 8 is an enlarged part perspective view of the packing member of Modified Example 2.

### DETAILED DESCRIPTION

Hereinafter, an embodiment of the present disclosure will be described with reference to the drawings. The scope of the present disclosure is not limited by what is disclosed herein. In the following description, the direction indicated by arrow D1 in the drawings is a "first direction" (the lateral direction of a packing member 1) and the direction indicated by arrow D2 in the drawings is a "second direction" (the longitudinal direction of the packing member 1). The first and second directions are orthogonal to each other.

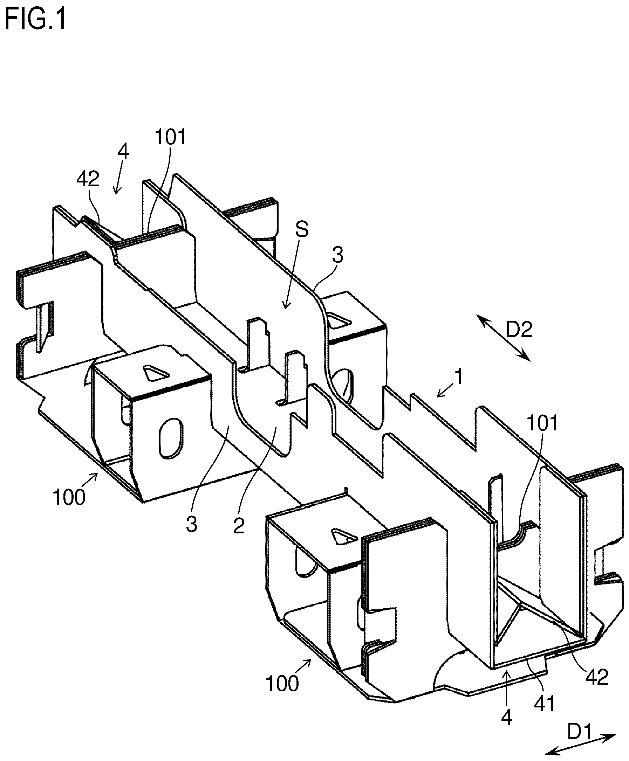

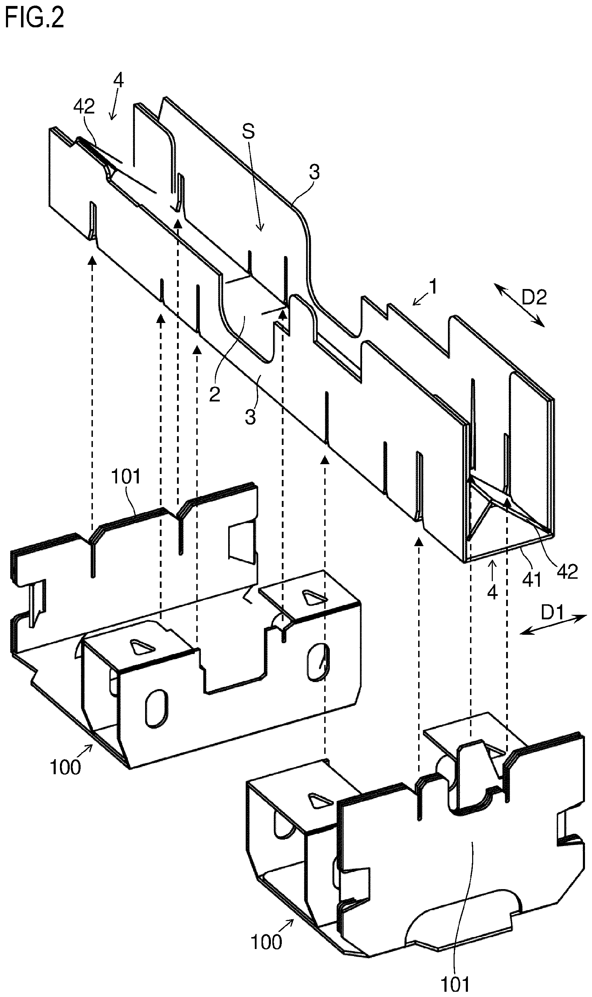

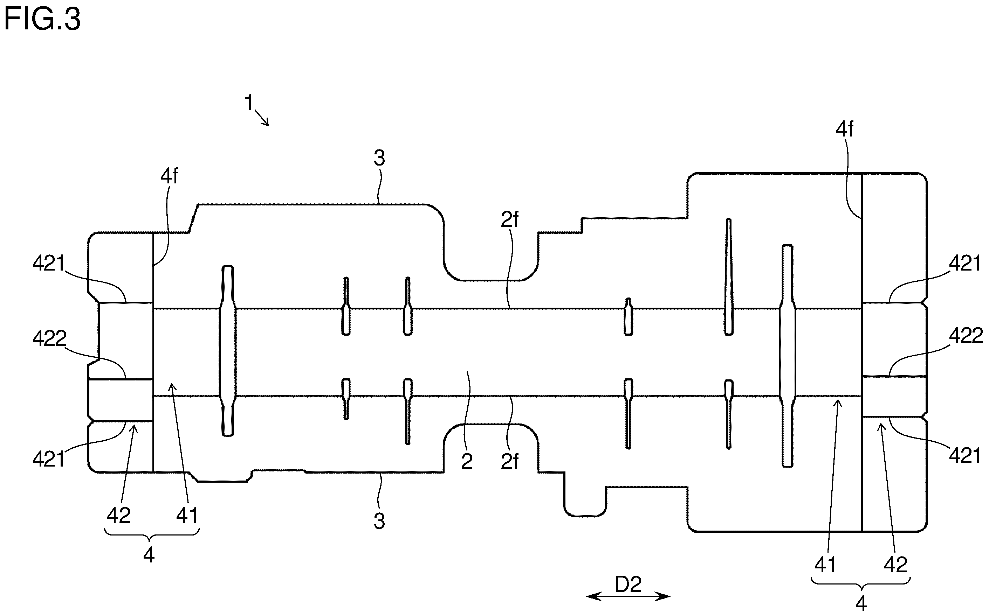

Figs. 1 and 2 are a perspective view and an exploded perspective view of a packing member 1 and a holding member 100 according to the embodiment. Fig. 3 is a development view of the packing member 1 in Fig. 1.

As shown in Figs. 1 and 2, the packing member 1 has a substantially rectangular parallelepiped outer shape and is elongate along the second direction D2. The packing member 1 is formed in a substantially U-shape as viewed from the second direction D2 and are held by two holding members 100 arranged at opposite ends in the second direction D2, which is the longitudinal direction. The packing member 1 has a storage space S inside it for a packed article (not shown). The packing member 1 is arranged, for example, inside a packing box (not shown), in a state held by the two holding members 100.

When unfolded, the packing member 1 appears as shown in the development view in Fig. 3. In its unfolded, flat state, the packing member 1 is a single sheet material (blank) in a rectangular outer shape formed of, for example, cardboard. That is, the packing member 1 is formed by bending a single sheet material.

The packing member 1 has a floor 2, a pair of side walls 3, and a pair of cushioning portions 4.

The floor 2 is arranged in substantially a middle part of the sheet material packing member 1 in a flat state along the shorter-side direction. The floor 2 is in a rectangular shape as viewed in a plan view that is elongate along the second direction D2 as viewed from the up-down direction.

In the sheet material packing member 1 in a flat state, the pair of side walls 3 are arranged outside of opposite ends of it in the shorter-side direction, across the floor 2. The pair of side walls 3 are formed by being bent upward from circumferential edges (fold lines 2f) of the floor 2. Specifically, the pair of side walls 3 are formed by being bent upward along two fold lines 2f provided away from each other in the shorter-side direction (the first direction D1) across the floor 2 and extending along the second direction D2 in the sheet material packing member 1 in a flat state.

The pair of side walls 3 are arranged opposite each other in the first direction D1 across the storage space S. The pair of side walls 3 are in a rectangular shape that is elongate along the second direction D2 as viewed from the opposite direction (the first direction D1).

The pair of cushioning portions 4 are arranged opposite each other at opposite ends in the second direction D2 across the storage space S. Specifically, in the assembled state shown in Fig. 1, the pair of cushioning portions 4 are arranged outside, in the second direction D2, of a blocking wall 101 of the holding member 100 that blocks opposite ends of the storage space S in the second direction D2. In the sheet material packing member 1 in a flat state, the pair of cushioning portions 4 are formed by bending its opposite ends in the second direction D2.

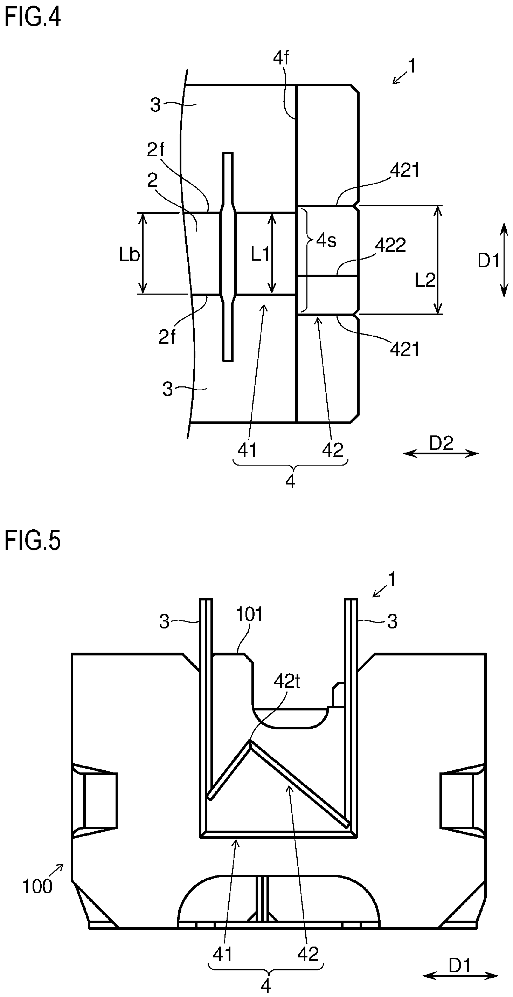

Next, the configuration of the cushioning portions 4 will be described in detail with reference to Figs. 4 and 5 in addition to Figs. 1, 2, and 3. Fig. 4 is an enlarged part development view of the packing member 1 in Fig. 3. Fig. 5 is a side view of the packing member 1 in Fig. 1 as viewed from the second direction D2. While Fig. 4 is an enlarged view around the cushioning portion 4 at one end, in the second direction D2, of the sheet material packing member 1, the cushioning portion 4 at the other end in the second direction D2 is configured similarly.

The cushioning portion 4 has a first cushioning portion 41 and a second cushioning portion 42.

In the assembled state shown in Figs. 1 and 5, the first cushioning portion 41 is arranged below the second cushioning portion 42. In the sheet material packing member 1 shown in Fig. 4, the first cushioning portions 41 are located inside of the second cushioning portions 42 arranged at opposite ends in the second direction D2. The first cushioning portions 41 are formed in a shape of a plate extending along the second direction D2. The ends of the plate-form first cushioning portions 41 in the second direction D2 face the storage space S in the second direction D2 so that the cushioning portions 4 obtains a cushioning action owing to the first cushioning portions 41.

Specifically, the first cushioning portions 41 are arranged at the same height as the floor 2. The first cushioning portions 41 are arranged on an extension line of the floor 2 in the second direction D2 and extend parallel to the floor 2. This configuration provides an enhanced cushioning effect at the floor of the storage space S.

In the assembled state shown in Figs. 1 and 5, the second cushioning portions 42 are arranged above the first cushioning portions 41 at an interval from it. In the sheet material packing member 1 shown in Fig. 4, the second cushioning portions 42 are arranged at opposite ends in the second direction D2 and are located outside of the first cushioning portions 41. The second cushioning portions 42 are formed in a shape of a plate extending along the second direction D2. The ends of the plate-form second cushioning portions 42 in the second direction D2 face the storage space S in the second direction D2 so that the cushioning portions 4 obtains a cushioning action owing to the second cushioning portions 42.

Specifically, as shown in Fig. 5, the second cushioning portions 42 are formed above the first cushioning portions 41 in an inverted V-shape as viewed from the second direction D2. In other words, the second cushioning portions 42 are formed in a shape convex upward such that a part around its middle in the first direction D1 is away from the first cushioning portions 41 (the floor 2).

With the configuration described above, the cushioning portions 4 face the storage space S for the packed article across two spaces, namely the first and second cushioning portions 41 and 42, to provide an enhanced cushioning effect. The packing member 1 does not require a measure such as increasing the overall thickness of the sheet material to enhance the cushioning effect of the cushioning portions 4. Thus, the packing member 1, despite having a cost-reduced configuration, provides an enhanced cushioning effect.

The vertex 42t of the inverted V-shaped second cushioning portions 42 can be arranged anywhere in the first direction D1 depending on the way to form (bend) the second cushioning portions 42.

In the sheet material packing member 1, the second cushioning portions 42 are formed by being bent along the boundaries (fold lines 4f) with the first cushioning portions 41 toward the middle in the second direction D2, so as to overlap above the first cushioning portions 41. Thus the second cushioning portions 42 are arranged above the first cushioning portions 41. The parts of the sheet material packing member 1 bent so as to overlap above the first cushioning portions 41 are overlaid inside the pair of side walls 3.

With the configuration described above, from a single sheet material, it is possible to easily from the first and second cushioning portions 41 and 42 provided away from each other in the up-down direction in the cushioning portion 4. There is no need for preparing a different sheet material as the second cushioning portions 42 and bonding the second cushioning portions 42 so as to arrange them above the first cushioning portions 41. Thus the packing member 1 can reduce the number of components and enhance the ease of assembly with a simple configuration and can in addition provide a further enhanced cushioning effect.

Specifically, the second cushioning portions 42 are formed by being bent in an inverted V-shape along a pair of valley fold lines 421 and a mountain fold line 422. As shown in Fig. 4, in the sheet material packing member 1, the pair of valley fold lines 421 are formed at an interval L2 from each other that is larger than the length L1 of the first cushioning portions 41 in the first direction D1 and extend in the second direction D2. The mountain fold line 422 is formed between the pair of valley fold lines 421 in the first direction D1 and extends in the second direction D2. Along a straight line segment 4s at the boundaries (fold lines 4f) between the second cushioning portions 42 and the first cushioning portions 41, between the pair of valley fold lines 421, there is formed a cut that penetrates the sheet material in the thickness direction.

With the configuration described above, above the first cushioning portions 41, it is possible to easily from the inverted V-shaped second cushioning portions 42.

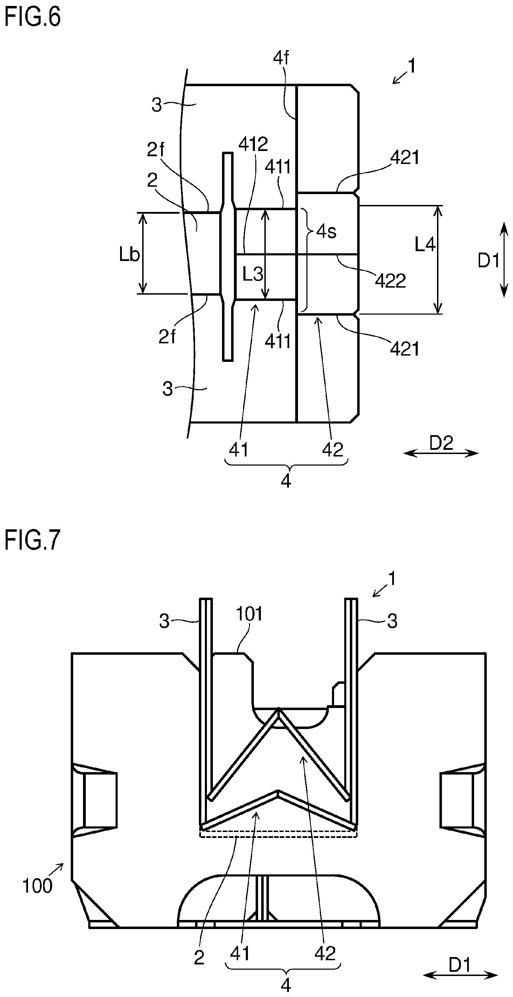

Next, the packing member 1 of Modified Example 1 will be described with reference to Figs. 6 and 7. Fig. 6 is an enlarged part development view of the packing member 1 of Modified Example 1. Fig. 7 is a side view of the packing member 1 of Modified Example 1 as viewed from the second direction D2. While Fig. 6 is an enlarged view around the cushioning portion 4 at one end, in the second direction D2, of the sheet material packing member 1, the cushioning portion 4 at the other end in the second direction D2 is configured similarly.

In the packing member 1 of Modified Example 1, the first cushioning portions 41 are formed in an inverted V-shape that inclines more gently than the second cushioning portions 42 with respect to the floor 2. Specifically, the first cushioning portions 41 is formed by being bent in an inverted V-shape along a pair of valley fold lines 411 and a mountain fold line 412.

As shown in Fig. 6, in the sheet material packing member 1, the pair of valley fold lines 411 are formed at an interval L3 from each other that is larger than the length Lb of the floor 2 in the first direction D1 and extend in the second direction D2. The interval L4 between the pair of valley fold lines 421 on the second cushioning portions 42 is larger than the interval L3 between the pair of valley fold lines 411 on the first cushioning portions 41. The mountain fold line 412 is formed between the pair of valley fold lines 411 in the first direction D1 and extends in the second direction D2. While the mountain fold line 412 on the first cushioning portions 41 is arranged at the middle in the first direction D1 like the mountain fold line 422 on the second cushioning portions 42, the former can be arranged elsewhere than where the latter is arranged.

With the configuration described above, the first cushioning portions 41 can be moved in the up-down direction. This provides an enhanced cushioning effect with respect to the storage space S with the first cushioning portions 41 anywhere, between the floor 2 and the second cushioning portions 42 in the up-down direction.

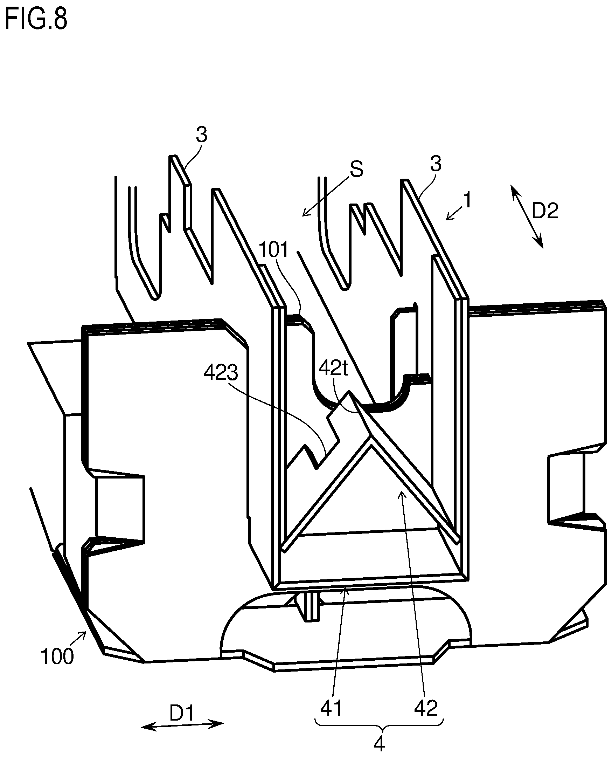

Next, the packing member 1 of Modified Example 2 will be described with reference to Fig. 8. Fig. 8 is an enlarged part perspective view of the packing member 1 of Modified Example 2.

In the packing member 1 of Modified Example 2, the second cushioning portions 42 have recessed portions 423. The recessed portions 423 are formed in parts of the second cushioning portions 42 facing the storage space S in the second direction D2. The recessed portions 423 are recessed from the middle (inside) to the end (outside) in the second direction D2. The recessed portions configured as described above are formed in at least one of the first and second cushioning portions 41 and 42.

With the configuration described above, the recessed portions 423 can be arranged at a desired place where the storage space S does not require a strong cushioning effect and should be prevented from being acted on by a cushioning action. This helps prevent a fragile part of the packed article from being damaged because of the configuration of the cushioning portion 4.

The embodiment of the present disclosure described above is not meant to limit the scope of the disclosure.

## Claims

1. A packing member (1) having a storage space (S) formed by bending a single sheet material, comprising:
a floor (2) in a rectangular shape;
a pair of side walls (3) formed by being bent upward from circumferential edges of the floor (2), the pair of side walls being arranged opposite each other across the storage space (S) in a first direction (D1);
a pair of cushioning portions (4) arranged opposite each other at opposite ends across the storage space (S) in a second direction (D2) orthogonal to the first direction (D1);
**characterized in that**
the cushioning portion (4) has
a first cushioning portion (41) formed in a shape of a plate extending along the second direction (D2), and
a plate-form second cushioning portion (42) arranged above the first cushioning portion (41) at an interval therefrom and extending along the second direction (D2), the second cushioning portion being formed in an inverted V-shape as viewed from the second direction (D2).

2. The packing member (1) according to claim 1, **characterized in that**
the second cushioning portion (42) is arranged at opposite ends of the sheet material in the second direction (D2), is located outside of the first cushioning portion (41), and is formed by being bent along a boundary with the first cushioning portion (41) toward a middle in the second direction (D2), so as to be arranged above the first cushioning portion (41).

3. The packing member (1) according to claim 2, **characterized in that**
the second cushioning portion (42) is formed by being bent in an inverted V-shape along
a pair of valley fold lines (421) formed at an interval from each other that is larger than a length of the first cushioning portion (41) of the sheet material in the first direction (D1), the pair of valley fold lines extending in the second direction (D2), and
a mountain fold line (422) formed between the pair of valley fold lines (421) and extending in the second direction (D2).

4. The packing member (1) according to claim 1, **characterized in that**
the first cushioning portion (41) is arranged on an extension line of the floor (2) in the second direction (D2) and extends parallel to the floor (2).

5. The packing member (1) according to claim 1, **characterized in that**
the first cushioning portion (41) is formed in an inverted V-shape that inclines more gently than the second cushioning portion (42) with respect to the floor (2).

6. The packing member (1) according to claim 1, **characterized in that**
at least one of the first and second cushioning portions (41, 42) has, in a part thereof facing the storage space (S), a recessed portion (423) recessed toward an end in the second direction (D2).
